# EUROPEAN PATENT APPLICATION

(11) **EP 3 364 334 A1**
(43) Date of publication of application: **22.08.2018**
(21) Application number: 18151171.8
(22) Date of filing: 11.01.2018
(51) Int. Cl.: G06K 7/10

(54) **READING APPARATUS**

(30) Priority: 16.02.2017 JP 2017027020
(71) Applicant: Toshiba TEC Kabushiki Kaisha, Tokyo 141-0032 (JP)
(72) Inventor: Shimura, Takahiro, Tokyo, 141-8562 (JP)
(74) Representative: Hoffmann Eitle

(57) **Abstract**

A tag reading system includes a cart including a loading section in which an article having a radio tag attached can be placed, a reading box including a housing formed of a radio wave blocking material and an opening, the housing enclosing a storage section capable of storing the loading section of the cart, and the opening permitting the cart to enter and exit the storage section, and an antenna that transmits and receives radio waves for reading the radio tag attached to the article when the cart is stored in the storage section.

## Description

### CROSS-REFERENCE TO RELATED APPLICATION

This application is based upon and claims the benefit of priority from Japanese Patent Application No. 2017-027020, filed February 16, 2017, the entire contents of which are incorporated herein by reference.

### FIELD

Embodiments described herein relate generally to a reading apparatus.

### BACKGROUND

An inventory management system in which a radio ID tag is used for tracking individual items is known. The management system reads a tag, such as an RFID (Radio Frequency Identification) tag, attached to an inventory article to thereby track the article.

In some cases, an inventory system operator wishes to read a large number of radio tags. In an existing technique, an operator needs to lift a storage container, in which a tagged article is stored, and place this storage container near a radio tag reading apparatus. In this technique, if the tagged article is heavy or if there are a large number of tagged articles, the workload of the of the inventory system operator will increase.

### SUMMARY OF THE INVENTION

One of the objects of the present invention is to improve prior art techniques and overcome at least some of the prior art problems as for instance above illustrated.

According to a first aspect of the present invention, it is provided a tag reading system, comprising: a cart including a loading section in which an article having a radio tag attached can be placed; a reading box including a housing formed of a radio wave blocking material and an opening, the housing enclosing a storage section capable of storing the loading section of the cart, and the opening permitting the cart to enter and exit the storage section; and an antenna that transmits and receives radio waves for reading the radio tag attached to the article when the cart is stored in the storage section.

According to a second aspect of the present invention, it is provided a tag reading system, comprising: a cart including a loading section in which an article having a radio tag attached can be placed; a reading box including a housing formed of a radio wave blocking material and an opening, the housing enclosing a storage section capable of storing the loading section of the cart, and the opening permitting the cart to enter and exit the storage section; and an antenna that transmits and receives radio waves for reading the radio tag attached to the article when the cart is stored in the storage section, wherein the antenna is on an inner wall of the housing.

Optionally, in the second aspect, the opening of the reading box has a substantially rectangular shape having a height and a width that are substantially the same as a height and a width of the loading section of the cart, respectively.

Optionally, the second aspect further comprises: a blocking section formed of a radio wave blocking material on a rear side of the cart, wherein the blocking section has substantially a same size and a same shape as the opening of the reading box so as to block the opening of the reading box when the cart is stored with a front side of the cart oriented opposite the opening of the reading box.

Optionally, in the second aspect, the cart further includes a non-interfering section between the blocking section and the loading section as to prevent interference from the blocking section in reading of the radio tag.

Optionally, in the second aspect, the non-interfering section is made of a dielectric.

According to a third aspect of the present invention, it is provided a tag reading system, comprising: a cart including a loading section in which an article having a radio tag attached can be placed; a reading box including a housing formed of a radio wave blocking material and an opening, the housing enclosing a storage section capable of storing the loading section of the cart, and the opening permitting the cart to enter and exit the storage section; and an antenna that transmits and receives radio waves for reading the radio tag attached to the article when the cart is stored in the storage section, wherein the antenna is attached to the cart.

Optionally, in the third aspect, the opening of the reading box has a substantially rectangular shape having a height and a width that are substantially the same as a height and a width of the cart, respectively.
Optionally, the third aspect further comprises a blocking section formed of a radio wave blocking material on a rear side of the cart, wherein the blocking section has substantially a same size and a same shape as the opening of the reading box so as to block the opening of the reading box when the cart is stored with a front side of the cart oriented opposite the opening of the reading box.

### DESCRIPTION OF THE DRAWINGS

FIG. 1 is a schematic diagram of a management system according to a first embodiment.
FIG. 2 is an overhead view a reading box.
FIG. 3 is an overhead view a cart stored inside a reading box.
FIG. 4 is a cross sectional view of a cart inside a reading box.
FIG. 5 is a block diagram of hardware of a management server.
FIG. 6 is a block diagram of hardware of a reading box.
FIG. 7 is a block diagram of a management system.
FIG. 8 is a sequence of reading processing.
FIG. 9 is a block diagram of hardware of a cart according to a second embodiment.
FIG. 10 is a block diagram of hardware of a reading box according to the second embodiment.
FIG. 11 is a cross sectional of a cart inside a reading box according to a third embodiment.

### DETAILED DESCRIPTION

In general, according to one embodiment, a tag reading system includes a cart including a loading section in which an article having a radio tag attached can be placed, a reading box including a housing formed of a radio wave blocking material and an opening, the housing enclosing a storage section capable of storing the loading section of the cart, and the opening permitting the cart to enter and exit the storage section, and an antenna that transmits and receives radio waves for reading the radio tag attached to the article when the cart is stored in the storage section.

Reading apparatuses according to example embodiments are explained below with reference to the drawings. It should be noted, that the particular embodiments explained below are some possible examples of a reading apparatus according to the present disclosure and do not limit the possible configurations, specifications, or the like of reading apparatuses according to the present disclosure. In general, the example embodiments are applied to a reading apparatus in a management system used to manage documents in a storage room or the like. But the present disclosure is not limited to use in this particular application.

### First Embodiment

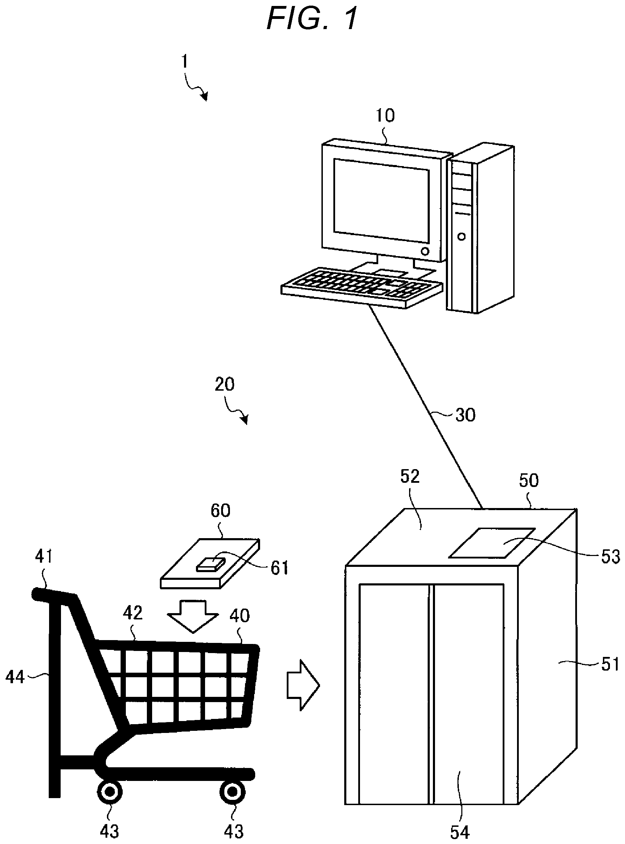

FIG. 1 is a schematic diagram showing an example of a management system 1 according to a first embodiment. The management system 1 includes a management server 10 and a reading apparatus 20. The management server 10 and the reading apparatus 20 are connected via a network 30 such as a wired or wireless LAN (Local Area Network). The management system 1 shown in FIG. 1 includes one management server 10 and one reading apparatus 20. However, the management system 1 may further include a plurality of management servers 10 and a plurality of reading apparatuses 20. Furthermore, in such instances, the total number of management servers 10 and the total number of reading apparatuses 20 may be different from each other.

In this example, the management server 10 is a server apparatus such as a personal computer. The management server 10 stores various kinds of information associated with a document 60 stored in a storage room. The management server 10 may also be provided by a cloud system service or the like that provides computer resources. Further, the management server 10 may be configured as a plurality of server apparatuses.

The reading apparatus 20 includes a cart 40 and a reading box 50. The cart 40 is a push cart or the like that can carry the document 60. The cart 40 includes a handle 41, a loading section 42, wheels 43, and a blocking section 44. The handle 41 is held by an operator who collects the document 60. The loading section 42 is where the document 60 collected by the operator is placed. The wheels 43 are provided in a lower part of the cart 40. The blocking section 44 is formed on a rear side of the cart 40 of a material that blocks radio waves such as those used for reading a radio tag 61. The blocking material may be a radio wave reflecting material that reflects a radio wave such as metal, or may be a radio wave absorbing material.

The document 60 is an example of an inventory article or item. The radio tag 61 is attached to the document 60. The radio tag 61 is, for example, an electronic tag, an RFID (Radio Frequency Identification) tag, or an IC (Integrated Circuit) tag. The radio tag 61 has stored therein tag information concerning or associated with the document 60. For example, the tag information includes a tag information code and document information. The tag information code is identification information for identifying the radio tag 61. The document information is information associated with the particular document 60 to which the radio tag 61 is attached.

The reading box 50 is an apparatus that reads the radio tag 61 attached to the document 60 in the cart 40. The reading box 50 is formed by a housing 51 made of a radio wave blocking material. The reading box 50 includes an operation panel 53 disposed on an upper surface 52 of the housing 51. The operation panel 53 is, for example, a touch panel display that displays various kinds of information for operating the reading box 50. Further, the operation panel 53 receives inputs related to various display contents displayed on the operation panel 53. The operation panel 53 may include mechanical buttons, switches, and the like.

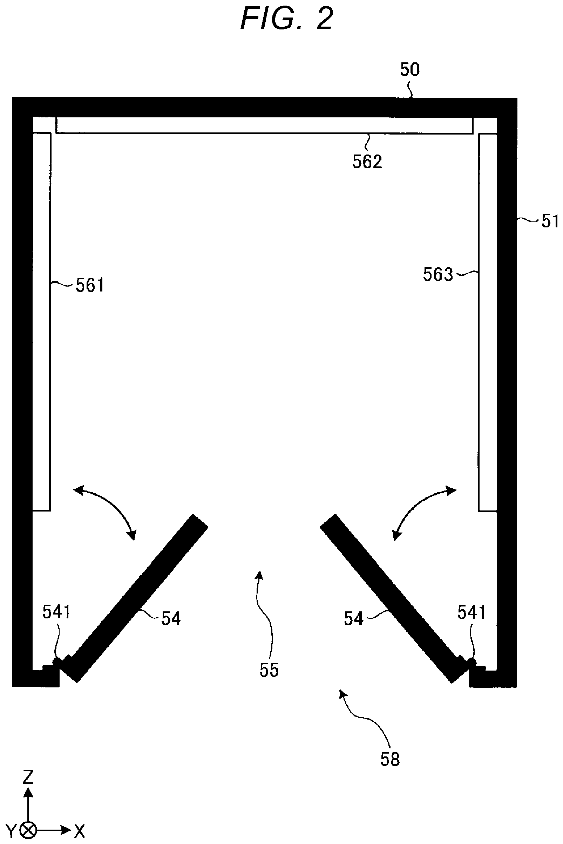

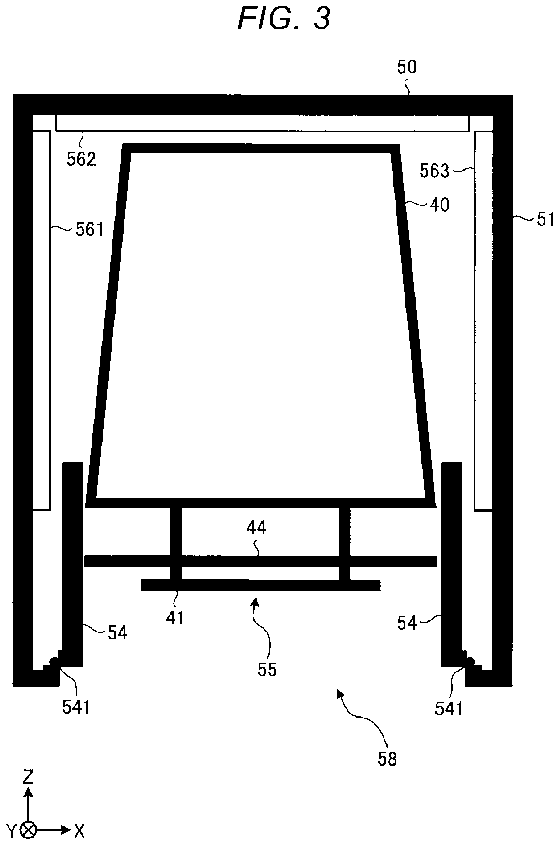

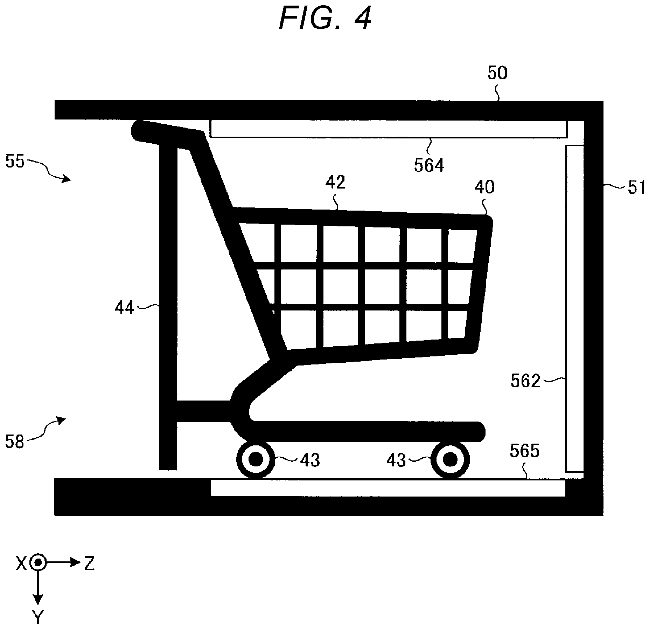

FIG. 2 is an overhead view of the reading box 50. FIG. 3 is an overhead view depicting the cart 40 stored inside the reading box 50. FIG. 4 is a cross sectional view of the cart 40 stored inside the reading box 50. The reading box 50 includes an opening 58 in the front surface of the housing 51 having a substantially rectangular shape. The opening 58 is a gateway permitting the leading of the cart 40 into and out of the reading box 50. The height of the opening 58 in a Y direction and the lateral width of the opening 58 in a X direction are substantially the same as the height of the cart 40 and the lateral width of the cart 40, respectively.

Further, the reading box 50 includes doors 54 capable of opening the opening 58 to and closing the opening 58 from the inner side of the reading box 50. The doors 54 include hinges 541 connecting to the housing 51 on left and right ends. The hinges 541 include springs for closing the doors 54 if no pressure is applied to the inner side of the doors 54. That is, the doors 54 can automatically close the opening 58 when no pressure is applied to the inner side of the doors 54.

In the reading box 50, a storage section 55 capable of storing the cart 40 is provided on the inner side of the doors 54. The height of the storage section 55 in the Y direction is equal to or larger than the height of the cart 40. The lateral width of the storage section 55 in the X direction is equal to or larger than the lateral width of the cart 40. The depth of the storage section 55 in a Z direction is larger than the depth of the cart 40. In this way, the reading box 50 includes the storage section 55 having a space capable of storing the cart 40. Further, the reading box 50 includes the doors 54 capable of opening to the inner side of the storage section 55. Therefore, the operator can load the cart 40 in the storage section 55 by pressing the cart 40 against the doors 54 from outside.

The reading box 50 includes a first antenna 561, a second antenna 562, a third antenna 563, a fourth antenna 564, and a fifth antenna 565 on all of inner surfaces, including side wall surfaces, a ceiling surface, and a bottom surface, other than a side wall surface on which the doors 54 are provided. The first antenna 561, the second antenna 562, the third antenna 563, the fourth antenna 564, and the fifth antenna 565 are antennas that transmit and receive a radio wave for reading the radio tag 61 attached to the document 60 in the cart 40 stored in the storage section 55. The first antenna 561, the second antenna 562, the third antenna 563, the fourth antenna 564, and the fifth antenna 565 are directed to the loading section 42 of the cart 40 when stored in the storage section 55. In the example embodiment described herein, the reading box 50 includes five antennas. However, the reading box 50 may include four or less antennas. Furthermore, the reading box 50 may include two or more antennas on each of the inner surfaces. The first antenna 561, the second antenna 562, the third antenna 563, the fourth antenna 564, and the fifth antenna 565 may be movable antennas that can be moved by mechanical systems. The movement mechanisms include, for example, screw shafts to which the antennas are connected and motors that rotate the screw shafts. The moving mechanisms rotate the motors to thereby move the antennas connected to the screw shafts in parallel to the surfaces to which the antennas are connected.

The storage section 55 is inside the housing 51. That is, the storage section 55 is a space covered by material that blocks radio waves when the radio tag 61 is being read. That is, when the radio tag 61 is being read, the material surrounding the storage section 55 can prevent radio waves from leaking from or into storage section 55. As a result, tag information of radio tags 61 attached to documents 60 outside of the storage section 55 are not read in error.

In a reading box 50 having the particular configuration explained above, when a cart 40 is stored in the storage section 55, the opening 58 cannot be closed because the doors 54 are obstructed by the cart 40 (see FIG. 3). However, as described, the cart 40 includes, on the rear side, the blocking section 44 having substantially the same size and shape as the opening 58 of the reading box 50. The blocking section 44 is formed of a radio wave blocking material. Therefore, when a cart 40 is stored in the storage section 55 (with a front side of the cart 40 oriented opposite the opening 58 of the reading box 50), the opening 58 can be closed off/blocked by the blocking section 44 of the cart 40. Consequently, the blocking section 44 can close the opening 58 and thus radio waves from the reading of the radio tag 61 or elsewhere are blocked. Therefore, the cart 40 and the storage section 55 can together prevent stray radio waves.

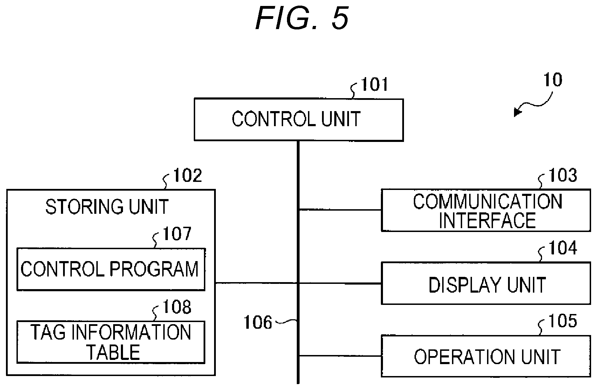

FIG. 5 is a block diagram of the management server 10. The management server 10 includes a control unit 101, a storing unit 102, a communication interface 103, a display unit 104, and an operation unit 105. The control unit 101, the storing unit 102, the communication interface 103, the display unit 104, and the operation unit 105 are connected to one another via a system bus 106 such as a data bus or an address bus.

The control unit 101 is a computer that controls the operation of the entire management server 10 and realizes various functions provided by the management server 10. The control unit 101 includes a CPU (Central Processing Unit), a ROM (Read Only Memory), and a RAM (Random Access Memory). The CPU collectively controls the operation of the management server 10. The ROM is a storage medium that stores various computer programs and data. The RAM is a storage medium that temporarily stores various computer programs and various data, and is rewritable. The CPU executes the computer programs stored in the ROM, the storing unit 102, or the like using the RAM as a work area.

The storing unit 102 is a storage device such as a HDD (Hard Disk Drive) or a SSD (Solid State Drive). The storing unit 102 stores a control program 107 and a tag information table 108. The control program 107 is a computer program for realizing an operating system and the functions provided by the management server 10. The control program 107 includes computer programs for realizing functions according to this embodiment.

The tag information table 108 is an information table storing tag information that has previously read from respective radio tags 61 attached to a plurality of documents 60. That is, the tag information table 108 is an information table that stores a list of tag information associated with management target documents 60.

The communication interface 103 is an interface for communicating with the reading apparatus 20 and the like connected to the network 30.

The display unit 104 is, for example, a liquid crystal display device. The operation unit 105 is an input device such as a keyboard or a mouse.

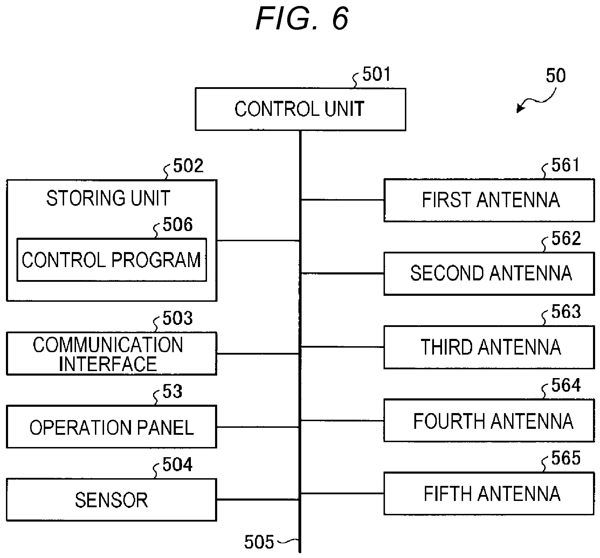

FIG. 6 is a block diagram of the reading box 50. The reading box 50 includes a control unit 501, a storing unit 502, a communication interface 503, the operation panel 53, a sensor 504, the first antenna 561, the second antenna 562, the third antenna 563, the fourth antenna 564, and the fifth antenna 565. The control unit 501, the storing unit 502, the communication interface 503, the operation panel 53, the sensor 504, the first antenna 561, the second antenna 562, the third antenna 563, the fourth antenna 564, and the fifth antenna 565 are connected to one another via a system bus 505 such as a data bus or an address bus.

The control unit 501 is a computer that controls the operation of the entire reading box 50 and realizes various functions provided by the reading box 50. The control unit 501 includes a CPU, a ROM, and a RAM. The CPU collectively controls the operation of the reading box 50. The ROM is a storage medium that stores various computer programs and data. The RAM is a storage medium that temporarily stores various computer programs and rewritably stores various data. The CPU executes the computer programs stored in the ROM, the storing unit 502, and the like using the RAM as a work area.

The storing unit 502 is a storage device such as a HDD or a SDD. The storing unit 502 stores a control program 506. The control program 506 is a computer program for realizing an operating system and the functions provided by the reading box 50. The control program 506 includes computer programs for realizing functions according to this embodiment.

The communication interface 503 is an interface for communicating with the management server 10 and the like connected to the network 30.

The sensor 504 outputs a signal to be used for determining whether a cart 40 is stored in the storage section 55. For example, the sensor 504 is an infrared ray sensor that detects with an infrared ray or the like whether the cart 40 is stored. The sensor 504 is not limited to the infrared types and may be a mechanical switch or the like that detects whether or not a cart 40 is present by depression or other operation of the switch causes by the cart 40, or a floor scale that detects whether or not a cart 40 is present according to a detected change in weight. The reading box 50 may include a plurality of sensors 504. Furthermore, the plurality of sensors 504 may include various types of sensors 504.

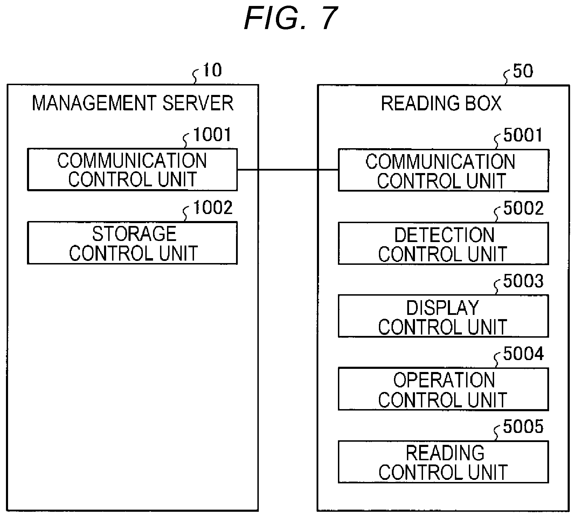

FIG. 7 is a block diagram of characteristic functional configurations of the apparatuses of the management system 1.

The control unit 101 of the management server 10 develops, in the RAM, the control program 107 stored in the storing unit 102 and operates according to the control program 107 to generate the functional units in the RAM. Specifically, the control unit 101 of the management server 10 includes a communication control unit 1001 and a storage control unit 1002 as the functional units.

The communication control unit 1001 controls the communication interface 103 and communicates with the reading box 50.

If the communication control unit 1001 receives tag information, the storage control unit 1002 causes the storing unit 102 to store the received tag information in the tag information table 108.

The control unit 501 of the reading box 50 develops, in the RAM, the control program 506 stored in the storing unit 502 and operates according to the control program 506 to generate the functional units in the RAM. Specifically, the control unit 501 of the reading box 50 includes a communication control unit 5001, a detection control unit 5002, a display control unit 5003, an operation control unit 5004, and a reading control unit 5005 as the functional units.

The communication control unit 5001 controls the communication interface 503 and communicates with the management server 10.

The detection control unit 5002 is an example of the detecting unit. The detection control unit 5002 detects by reference to a signal output from the sensor 504 whether a cart 40 is stored in the storage section 55. If the reading box 50 includes a plurality of sensors 504, the detection control unit 5002 detects, by reference to signals output from the plurality of sensors 504, whether the cart 40 is stored in the storage section 55.

The display control unit 5003 controls the operation panel 53 to display various screens. For example, if the detection control unit 5002 detects that the cart 40 is stored in the storage section 55, the display control unit 5003 causes the operation panel 53 to display a reading button for starting reading of the radio tag 61. If the reading of the radio tag 61 ends, the display control unit 5003 causes the operation panel 53 to display an end screen on which the end of the reading of the radio tag 61 is displayed.

The operation control unit 5004 controls the operation panel 53 and receives various instructions. For example, the operation control unit 5004 receives the pressing of the reading button displayed on the operation panel 53.

The reading control unit 5005 controls reading of the ratio tag 61 inside the storage section 55. If the operation control unit 5004 receives the pressing of the reading button, the reading control unit 5005 starts reading of the radio tag 61 present inside the storage section 55. That is, the reading control unit 5005 controls the first antenna 561, the second antenna 562, the third antenna 563, the fourth antenna 564, and the fifth antenna 565 and reads the ratio tag 61. More specifically, the reading control unit 5005 causes the antennas to transmit radio waves for reading the radio tag 61. If the radio tag 61 receives the radio waves, the radio tag 61 transmits the stored tag information on a radio wave. The antennas receive the radio wave transmitted from the radio tag 61. The reading control unit 5005 extracts the tag information included in the radio wave received by the antennas. Consequently, the reading control unit 5005 reads the tag information stored in the radio tag 61. The reading control unit 5005 generates a list of tag information that has been read from one or a plurality of radio tags 61. The reading control unit 5005 causes the communication control unit 5001 to transmit the list of the tag information. Further, the reading control unit 5005 notifies the display control unit 5003 that the reading of the radio tag 61 ends and causes the display control unit 5003 to display an end screen.

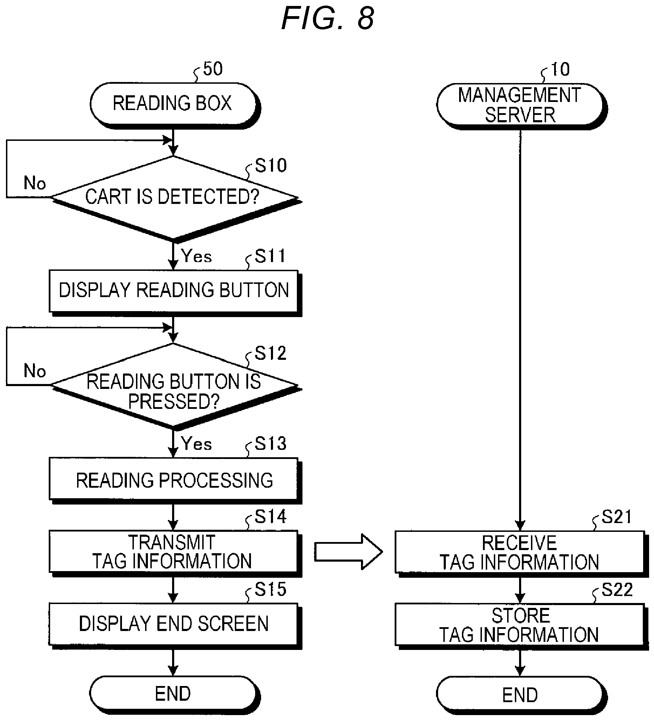

Reading processing executed by the management system 1 will be explained hereinafter. FIG. 8 depicts a sequence of the reading processing executed by the management system 1 according to the first embodiment.

The detection control unit 5002 of the reading box 50 stays on standby until the detection control unit 5002 detects that the cart 40 is stored in the storage section 55 of the reading box 50 (No in Act 10).

If the detection control unit 5002 detects that the cart 40 is stored (Yes in Act 10), the display control unit 5003 of the reading box 50 causes the operation panel 53 to display the reading button.

The operation control unit 5004 of the reading box 50 stays on standby until the operation control unit 5004 receives operation for pressing the reading button (No in Act 12).

If the operation control unit 5004 receives the operation for pressing the reading button (Yes in Act 12), the reading control unit 5005 of the reading box 50 executes reading processing for reading the radio tag 61 attached to the document 60 present inside the storage section 55 (Act 13).

The communication control unit 5001 of the reading box 50 transmits the tag information that has been read by the reading processing to the management server 10 (Act 14). The display control unit 5003 of the reading box 50 causes the operation panel 53 to display an end screen indicating that the reading processing ends (Act 15).

The communication control unit 1001 of the management server 10 receives the tag information transmitted from the reading box 50 (Act 21). The storage control unit 1002 of the management server 10 causes the storing unit 102 to store the received tag information in the tag information table 108 (Act 22).

Consequently, the management system 1 ends the reading processing.

As explained above, in the management system 1 according to the first embodiment, the reading apparatus 20 includes the cart 40 and the reading box 50. If the operator simply pushes the cart 40 into the storage section 55 of the reading box 50, the reading apparatus 20 reads the radio tag 61 attached to the document 60 loaded on the cart 40. Therefore, the reading apparatus 20 can reduce a work load of the operator.

### Second Embodiment

A second embodiment will be explained hereinafter. Differences from the first embodiment are mainly explained. The same reference numerals are used for the components that are substantially the same as those of the first embodiment, and the description of repeated components may be omitted.

The reading apparatus 20 according to the second embodiment is different from the reading apparatus 20 in the first embodiment in that, instead of a reading box 50, a cart 40 includes antennas. For example, if receiving a reading request for the radio tag 61 from the reading box 50 through a short-range wireless communication or the like, the cart 40 reads the radio tag 61 attached to the document 60. The cart 40 transmits the tag information that has been read to the reading box 50 through the short-range wireless communication or the like.

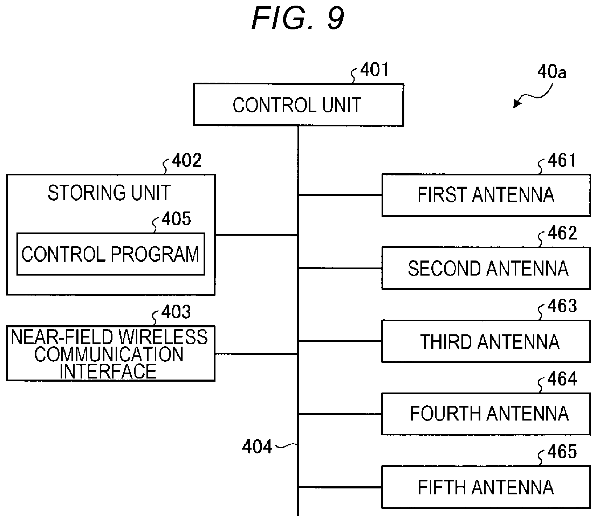

FIG. 9 is a block diagram of the cart 40 according to the second embodiment. The cart 40 includes a control unit 401, a storing unit 402, a short-range wireless communication interface 403, a first antenna 461, a second antenna 462, a third antenna 463, a fourth antenna 464, and a fifth antenna 465. The control unit 401, the storing unit 402, the short-range wireless communication interface 403, the first antenna 461, the second antenna 462, the third antenna 463, the fourth antenna 464, and the fifth antenna 465 are connected to one another via a system bus 404 such as a data bus or an address bus.

The control unit 401 is a computer that controls the operation of the entire cart 40 and realizes various functions provided by the cart 40. The control unit 401 includes a CPU, a ROM, and a RAM. The CPU collectively controls the operation of the cart 40. The ROM is a storage medium that stores various computer programs and data. The RAM is a storage medium that temporarily stores various computer programs and rewritably stores various data. The CPU executes the computer programs stored in the ROM, the storing unit 402, or the like using the RAM as a work area. The control unit 401 controls the storing unit 402, the short-range wireless communication interface 403, the first antenna 461, the second antenna 462, the third antenna 463, the fourth antenna 464, and the fifth antenna 465.

The storing unit 402 is a storage device such as a HDD or a SDD. The storing unit 402 stores a control program 405. The control program 405 is a computer program for realizing an operating system and the functions provided by the cart 40. The control program 405 includes computer programs for realizing functions according to this embodiment.

The short-range wireless communication interface 403 is an interface for performing short-range wireless communication such as NFC (Near Field Communication), infrared communication, or Bluetooth®. For example, the short-range wireless communication interface 403 receives a reading request for the radio tag 61 from the reading box 50. The short-range wireless communication interface 403 transmits tag information that has been read from the radio tag 61 to the reading box 50.

The first antenna 461, the second antenna 462, the third antenna 463, the fourth antenna 464, and the fifth antenna 465 are antennas that transmit and receive radio waves for reading the radio tag 61 attached to the document 60. The first antenna 461, the second antenna 462, the third antenna 463, the fourth antenna 464, and the fifth antenna 465 are provided on the side surfaces and the bottom surface of the loading section 42. Further, the first antenna 461, the second antenna 462, the third antenna 463, the fourth antenna 464, and the fifth antenna 465 are directed to the loading section 42. The cart 40 includes five antennas in the example embodiment described herein. However, the cart 40 may include four or less antennas. Further, the cart 40 may include two or more antennas on each of the surfaces. Furthermore, the first antenna 461, the second antenna 462, the third antenna 463, the fourth antenna 464, and the fifth antenna 465 may be movable antennas that can be moved by moving mechanisms in parallel to the surfaces to which the antennas are connected.

For example, if the short-range wireless communication interface 403 receives a reading request for the ratio tag 61, the control unit 401 causes the first antenna 461, the second antenna 462, the third antenna 463, the fourth antenna 464, and the fifth antenna 465 to transmit radio waves for reading the ratio tag 61. If any one of the first antenna 461, the second antenna 462, the third antenna 463, the fourth antenna 464, and the fifth antenna 465 receives tag information, the control unit 401 causes the antenna to transmit the received tag information to the reading box 50.

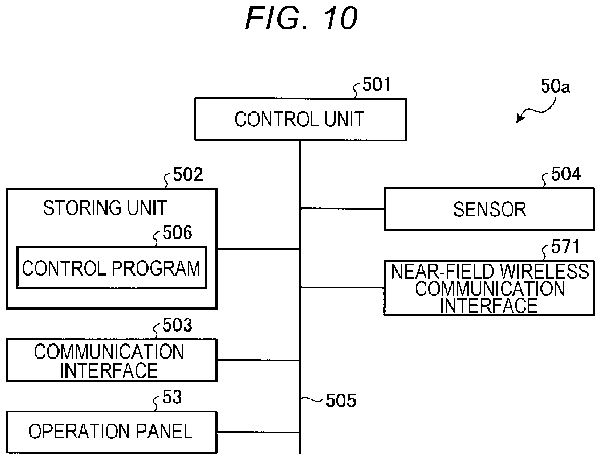

FIG. 10 is a block diagram of the reading box 50 according to the second embodiment. The reading box 50 includes the control unit 501, the storing unit 502, the communication interface 503, the operation panel 53, the sensor 504, and a short-range wireless communication interface 571. The control unit 501 controls, in accordance with the control program 506, the storing unit 502, the communication interface 503, the operation panel 53, the sensor 504, and the short-range wireless communication interface 571 connected via the system bus 505.

The short-range wireless communication interface 571 is an interface for performing short-range wireless communication such as NFC, infrared ray communication, or Bluetooth (registered trademark). For example, the short-range wireless communication interface 571 transmits a reading request for the radio tag 61 to the cart 40. The short-range wireless communication interface 571 receives tag information from the cart 40.

As explained above, in the management system 1 according to the second embodiment, as in the first embodiment, the reading apparatus 20 reads the radio tag 61 when an operator simply pushes the cart 40 loaded with the document 60 into the storage section 55 of the reading box 50. Therefore, the reading apparatus 20 can reduce a work load of the operator.

### Third Embodiment

A third embodiment will be explained hereinafter. Differences from the first embodiment are mainly explained. The same reference numerals are used for the components that are substantially the same as those of the first embodiment, and the description of repeated components may be omitted.

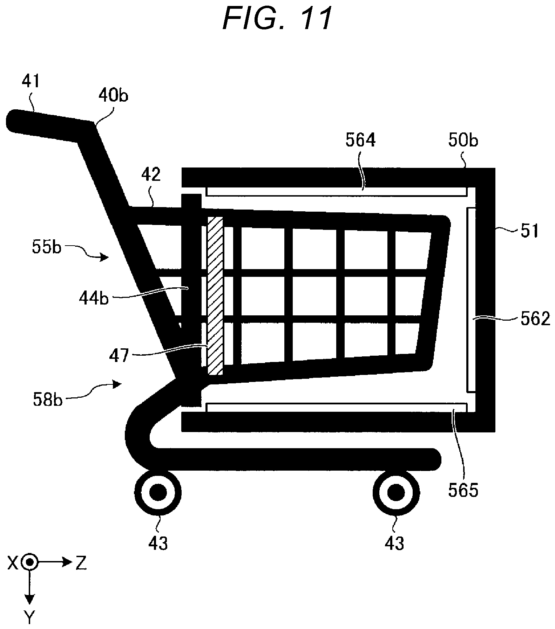

FIG. 11 is a cross sectional view of a cart 40b is stored inside a reading box 50b according to the third embodiment. In the reading apparatus 20 according to the third embodiment, the reading box 50b includes a storage section 55b capable of storing the loading section 42 of the cart 40b. The reading box 50b includes an opening 58b functioning as a gateway of the loading section 42 of the cart 40b. The height of the opening 58b in the Y direction and the lateral width of the opening 58b in the X direction are substantially the same as the height of the loading section 42 of the cart 40b and the lateral width of the loading section 42 of the cart 40b. The height of the storage section 55b in the Y direction, the lateral width of the storage section 55b in the X direction, and the depth of the storage section 55b in the Z direction are substantially the same as the height of the loading section 42 of the cart 40b, the lateral width of the loading section 42 of the cart 40b, and the depth of the loading section 42 of the cart 40b.

A blocking section 44b included in the cart 40b is formed in substantially the same size as the opening 58b of the reading box 50b. The cart 40b includes the blocking section 44b in the loading section 42.

If the blocking section 44b is made of metal or the like, the blocking section 44 interferes and hinders reading of the radio tag 61 when the radio tag 61 is present near the blocking section 44b. Therefore, the cart 40b includes a non-interfering section 47 that prevents the interference of the reading of the radio tag 61. The non-interfering section 47 is configured by, for example, a dielectric. The non-interfering section 47 is not limited to the dielectric and may form a gap between the radio tag 61 and the blocking section 44b. The cart 40b may include the blocking section 44b on the outside of the loading section 42. In this case, the cart 40b may not include the non-interfering section 47 because the cart 40b has a sufficient gap between the radio tag 61 and the blocking section 44b.

As explained above, in the management system 1 according to the third embodiment, as in the first embodiment, the reading apparatus 20 reads the radio tag 61 when an operator simply pushes the cart 40b loaded with the document 60 into the storage section 55b of the reading box 50b. Therefore, the reading apparatus 20 can reduce a work load of the operator. Furthermore, since the reading box 50b according to the third embodiment is small, it is possible to dispose the reading box 50b in a narrow region.

The several embodiments are explained above. However, the embodiments are presented as examples and are not intended to limit the scope of the invention. The new embodiments can be implemented in other various forms. Various omissions, replacements, and changes of the embodiments can be performed without departing from the spirit of the invention. The embodiments and modifications of the embodiments are included in the scope and the gist of the invention and included in the inventions described in claims and the scope of equivalents of the inventions.

In the above-described example embodiments, the antennas are provided in the reading box 50 or 50b in an example and are provided in the cart 40 in another example. However, antennas may be distributed in the reading box 50 or 50b and the cart 40 or 40b. Furthermore, if the storage section 55 stores the entire cart 40, the cart 40 may include the antennas in positions other than the loading section 42. For example, the cart 40 may include the antennas in a frame for supporting the wheels 43 with the antennas directed to the direction of the loading section 42. A frame for supporting the antennas may be provided on the outer side of the loading section 42 to provide the antennas.

In the above-described embodiments, it is explained that the reading apparatus 20 starts the reading processing for reading the radio tag 61 when the reading button displayed on the operation panel 53 is pressed. However, the reading apparatus 20 may start the reading processing on condition that the detection control section 5002 detects the cart 40 or 40b. That is, the reading apparatus 20 may automatically start the reading processing irrespective of whether the reading button is pressed.

The computer programs executed by the apparatuses in the above-described example embodiments and the modifications are provided while being incorporated in advance in storage media (ROMs or storing units) included in the apparatuses. However, the computer programs are not be provided in storage media in advance. For example, the computer programs may be provided while being recorded in a computer-readable recording medium such as a CD-ROM, a flexible disk (FD), a CD-R, or a DVD (Digital Versatile Disk) as a file of an installable format or an executable format. The storage media are not limited to media independent from a computer or an incorporated system and include storage media in which the computer programs transmitted by a LAN, the Internet, or the like are downloaded and stored or temporarily stored.

The computer programs executed by the apparatuses in the embodiments and the modifications may be stored on a computer connected to a network such as the Internet and may be provided by being downloaded through the network or may be provided or distributed through the network such as the Internet.

## Claims

1. A tag reading system, comprising:
a cart including a loading section in which an article having a radio tag attached can be placed;
a reading box including a housing formed of a radio wave blocking material and an opening, the housing enclosing a storage section capable of storing the loading section of the cart, and the opening permitting the cart to enter and exit the storage section; and
an antenna that transmits and receives radio waves for reading the radio tag attached to the article when the cart is stored in the storage section.

2. The tag reading system according to claim 1, wherein the antenna is on an inner wall of the housing.

3. The tag reading system according to claim 1, wherein the antenna is attached to the cart.

4. The tag reading system according to any of claims 1 to 3, wherein the opening of the reading box has a substantially rectangular shape having a height and a width that are substantially the same as a height and a width of the cart, respectively.

5. The reading system according to any of claims 1 to 4, wherein the opening of the reading box has a substantially rectangular shape having a height and a width that are substantially the same as a height and a width of the loading section of the cart, respectively.

6. The tag reading system according to any of claims 1 to 5, further comprising:
a blocking section formed of a radio wave blocking material on a rear side of the cart, wherein
the blocking section has substantially a same size and a same shape as the opening of the reading box so as to block the opening of the reading box when the cart is stored with a front side of the cart oriented opposite the opening of the reading box.

7. The tag reading system according to claim 6, wherein the cart further includes a non-interfering section between the blocking section and the loading section as to prevent interference from the blocking section in reading of the radio tag.

8. The tag reading system according to claim 7, wherein the non-interfering section is made of a dielectric.

9. The tag reading system according to any of claims 1 to 8, further comprising:
a sensor configured to detect the cart stored in the storage section, wherein
the antenna transmits and receives the radio waves for reading the radio tag when the sensor detects the cart in the storage section.

10. A tag reading system, comprising:
a cart including a loading section in which an article having a radio tag attached can be placed;
a reading box including a housing formed of a radio wave blocking material and an opening, the housing enclosing a storage section capable of storing the loading section of the cart, and the opening permitting the cart to enter and exit the storage section; and
an antenna that transmits and receives radio waves for reading the radio tag attached to the article when the cart is stored in the storage section, wherein
the antenna is on an inner wall of the housing.

11. The tag reading system according to claim 10, wherein the opening of the reading box has a substantially rectangular shape having a height and a width that are substantially the same as a height and a width of the cart, respectively.

12. The tag reading system according to claim 10 or 11, further comprising:
a blocking section formed of a radio wave blocking material on a rear side of the cart, wherein
the blocking section has substantially a same size and a same shape as the opening of the reading box so as to block the opening of the reading box when the cart is stored with a front side of the cart oriented opposite the opening of the reading box.

13. The tag reading system according to any of claims 10 to 12, further comprising:
a sensor configured to detect the cart stored in the storage section, wherein
the antenna transmits and receives the radio waves for reading the radio tag when the sensor detects the cart in the storage section.

14. A tag reading system, comprising:
a cart including a loading section in which an article having a radio tag attached can be placed;
a reading box including a housing formed of a radio wave blocking material and an opening, the housing enclosing a storage section capable of storing the loading section of the cart, and the opening permitting the cart to enter and exit the storage section; and
an antenna that transmits and receives radio waves for reading the radio tag attached to the article when the cart is stored in the storage section, wherein
the antenna is attached to the cart.

15. The tag reading system according to claim 14, further comprising:
a sensor configured to detect the cart stored in the storage section, wherein
the antenna transmits and receives the radio waves for reading the radio tag when the sensor detects the cart in the storage section.
